# EUROPÄISCHE PATENTSCHRIFT

(11) **EP 0 672 841 B1**
(45) Veröffentlichungstag und Bekanntmachung des Hinweises auf die Patenterteilung: **17.03.1999**
(21) Anmeldenummer: 94117517.6
(22) Anmeldetag: 07.11.1994
(51) Int. Cl.: F16C 33/20, F16C 33/74, B29D 31/02, B21D 53/10

(54) **Verfahren zur Herstellung einer Zentrierhülse**
Method for manufacturing a centering sleeve
Procédé de fabrication d'une douille de centrage

(30) Priorität: 16.03.1994 DE 4408846
(43) Veröffentlichungstag der Anmeldung: 20.09.1995
(73) Patentinhaber: Firma Carl Freudenberg, 69469 Weinheim (DE)
(72) Erfinder: Hamaekers, Arno, D-69517 Gorxheimertal (DE)

(56) Entgegenhaltungen:
- EP-A- 0 263 076
- EP-A- 0 521 645
- FR-A- 2 466 663
- US-A- 2 644 199
- US-A- 2 981 573
- US-A- 4 774 749

## Beschreibung

Die Erfindung betrifft ein Verfahren zur Herstellung einer Zentrierhülse, bei dem ein metallischer Stützkörper innenseitig zumindest in einem Teilbereich mit einer Beschichtung aus polymerem Werkstoff versehen wird, die zumindest an einem Ende ihrer axialen Erstreckung mit einer die Achse konzentrisch umschließenden Dichtlippe versehen ist.

Die Herstellung von Zentrierhülsen erfolgte bisher durch spanabhebende Fertigungsverfahren, beispielsweise durch Drehen oder Fräsen, wobei mehrere Bearbeitungsschritte erforderlich waren, bis die Zentrierhülse in ihre endgültige Form gebracht war. Insbesondere auf der dem Gehäuse zugewandten Mantelfläche der Zentrierhülse war eine zeitaufwendige Oberflächenbearbeitung und eine im Anschluß an die Formgebung durchzuführende Entgratung der Kanten erforderlich, um einen exakten Sitz der Zentrierhülse im Gehäuse sicherzustellen. In fertigungstechnischer und wirtschaftlicher Hinsicht ist ein derartiges Verfahren wenig befriedigend. Außerdem ist zu beachten, daß durch die spanabhebende Bearbeitung der Zentrierhülse Teile der Werkstoffasern durchtrennt werden, wodurch während einer langen Gebrauchsdauer der Zentrierhülse die Gefahr eines Dauerbruchs durch die schwellende Biegebelastung auf die Zentrierhülse besteht.

Aus der FR- A- 2 466 663 ist eine gattungsähnliche elastische Hülse bekannt, bei der ein metallischer Stützkörper innenseitig mit einer Beschichtung aus polymerem Werkstoff versehen wird und bei der zumindest an einem Ende seiner axialen Erstreckung eine die Achse konzentrisch umschließende Dichtlippe vorgesehen ist, die einstückig mit einer außenseitigen Beschichtung des Stützkörpers ausgebildet ist. Eine solche Hülse wird dadurch hergestellt, daß dem Stützkörper durch Kaltverformen das gewünschte Profil verliehen wird und daß das Profil anschließend mit den Beschichtungen und der Dichtlippe versehen wird.

Aus der US- A- 2 644 199 ist ein Verfahren zur Herstellung eines Gleitlagers bekannt, bei dem einem metallischen Stützkörper durch Kaltverformen eine Wandung verliehen wird, die ein in axialer Richtung U- förmig geöffnetes Profil aufweist, das anschließend innenseitig mit einer Beschichtung aus polymerem Werkstoff versehen wird.

Aus der US- A- 2 981 573 ist ein Gleitlager aus Kunstsstoff bekannt, bei dem an einem Ende eine Dichtlippe einstückig angeformt ist.

Die Kalibrierung eines aus einem metallischen Stützkörper und einer Polymerbeschichtung bestehenden Gleitlagers ist aus der US- A- 2 981 573 bekannt.

Der Erfindung liegt die Aufgabe zugrunde, ein Verfahren zur Herstellung einer Zentrierhülse der eingangs genannten Art derart weiterzuentwickeln, daß die Zentrierhülse in fertigungstechnischer Hinsicht einfacher und kostengünstiger herstellbar ist und daß die Zentrierhülse, auch wenn sie schwellenden Biegebelastungen ausgesetzt ist, verbesserte Gebrauchseigenschaften während einer längeren Gebrauchsdauer aufweist.

Diese Aufgabe wird erfindungsgemäß durch das Verfahren gemäß Anspruch 1 bzw. die Zentrierhülse gemäß Anspruch 4 gelöst. Auf vorteilhafte Ausgestaltungen nehmen die Unteransprüche Bezug.

Bei dem erfindungsgemäßen Verfahren zur Herstellung einer Zentrierhülse ist es vorgesehen, daß dem Stützkörper durch Tiefziehen eines kaltverformbaren Werkstoffs eine Wandung verliehen wird, die ein in axialer Richtung U-förmig geöffnetes Profil aufweist und daß das Profil im Anschluß an seine Erzeugung mit der Beschichtung aus polymerem Werkstoff versehen wird und anschließend durch eine radiale Stauchung des Außendurchmessers und/oder eine radiale Aufweitung des Innendurchmessers kalibriert wird. Hierbei ist von Vorteil, daß die Werkstoffasern der Zentrierhülse durch den Tiefziehvorgang umgelenkt, aber nicht durchtrennt werden, so daß die Zentrierhülse eine hohe Festigkeit bei großer Zähigkeit aufweist. Eine betriebsbedingte Beaufschlagung der Zentrierhülse mit eingeleiteten Schwingungen kann dadurch problemlos aufgenommen werden, ohne daß die Gefahr eines Dauerbruchs und somit eines Ausfalls des Bauteils besteht. Die Gebrauchseigenschaften der Zentrierhülsen werden durch das in axialer Richtung U-förmig geöffnete Profil verbessert, da beispielsweise Radialauslenkungen einer abzustützenden Welle elastisch nachgiebig durch den in radialer Richtung angrenzenden Schenkel mit seiner Beschichtung aufgenommen werden. Zum weitgehenden Ausgleich herstellungsbedingter Toleranzen wird die Zentrierhülse nach ihrer Beschichtung mit elastomerem Werkstoff in radialer Richtung kalibriert.

Eine Kalibrierung kann durch eine radiale Stauchung des Außendurchmessers und/oder durch eine radiale Aufweitung des Innendurchmessers erfolgen, um eine einwandfreie Passgenauigkeit innerhalb des aufzunehmenden Gehäuses zu erzielen und um eine exakte Lage, bezogen auf die abzustützende Welle, zu erhalten.

Die Kalibrierung kann durch Einpressung in eine Aufnahmebohrung vorgenommen werden.

Der radiale Zwischenraum zwischen den in axialer Richtung vorspringenden Schenkeln des U-förmig geöffneten Profils kann vollständig mit polymerem Werkstoff ausgefüllt werden. Hierbei ist von Vorteil, daß sowohl die Beschichtung als auch die Füllung des U-förmigen Profils in einem Verfahrensschritt mit der Zentrierhülse vulkanisiert werden können. Der Werkstoff, der für die Beschichtung und die Füllung zur Anwendung gelangt, ist derart ausgelegt, daß die Beschichtung und die in axialer Richtung einstückig mit der Beschichtung ausgebildete Dichtlippe auch bei langer Gebrauchsdauer nur einen geringen abrasiven Verschleiß aufweisen und daß auftretende Schwingungen minimiert werden. Die Füllung des Zwischenraums bewirkt eine, im Vergleich zu einem nicht-ausgefüllten Zwischenraum verbesserte Dämpfungswirkung der Zentrierhülse.

Die nach dem erfindungsgemäßen Verfahren hergestellte Zentrierhülse ist derart ausgestaltet, daß der in radialer Richtung außenliegende Schenkel des Profils die Dichtlippe radial außenseitig in einem Abstand umschließt. Hierbei ist von Vorteil, daß die Dichtlippe den abzudichtenden Körper, beispielsweise eine Welle, auch dann mit annähernd gleichem Anpreßdruck umfangsseitig umschließt, wenn dieser betriebsbedingt zu Schwingungen angeregt wird und dadurch radiale Auslenkbewegungen bedingt sind. Durch die radiale Nachgiebigkeit der Dichtlippe ist ein betriebsbedingter abrasiver Verschleiß auf ein Minimum reduziert, so daß eine gleichbleibend gute Abdichtung während einer langen Gebrauchsdauer erzielt wird. Zur Abdichtung von Flüssigkeiten, die unter geringem Druck stehen, hat es sich als vorteilhaft bewährt, wenn die Dichtlippe durch eine umfangsseitig umlaufende Ringwendelfeder dichtend an die Oberfläche des abzudichtenden Bauteils angedrückt wird. Steht das abzudichtende Medium demgegenüber unter einem relativen Überdruck, der mehr als etwa 10 bar beträgt, ist die Verwendung einer Ringwendelfeder zumeist entbehrlich.

Gemäß einer vorteilhaften Ausgestaltung kann es vorgesehen sein, daß die Beschichtung radial innerhalb des innenliegenden Schenkels des Profils zumindest zwei in axialer Richtung aufeinanderfolgende, radial nach innen vorspringende Führungsrippen aufweist. Hierbei ist von Vorteil, daß die Zentrierhülse, die die Dichtlippe und die Beschichtung umfaßt, einfacher mit dem abzudichtenden, relativ beweglichen Bauteil zu montieren ist, da die Auflagefläche zwischen der Beschichtung und dem Bauteil auf in axialer Richtung relativ kurze, umlaufende Berührungsflächen begrenzt ist, die die abzudichtende Oberfläche mit radialer Vorspannung umschließen. Der zur axialen Relativverschiebung der beiden Teile zueinander benötigte Kraftaufwand, ist durch eine derartige Ausgestaltung gering. Außerdem bilden die radialen Vorsprünge der Beschichtung zusätzliche Dichtbereiche, um eine eventuelle Leckage, die an der Dichtlippe vorbei in Richtung der Umgebung ausgetreten sind, zurückzuhalten. Die Hohlräume, die durch die Oberfläche der Beschichtung zwischen den Führungsrippen und die Oberfläche der abzudichtenden Welle begrenzt sind, können beispielsweise, um die Dichtwirkung zu erhöhen, mit einer Fettfüllung versehen sein. Ein weiterer Vorteil der in radialer Richtung nach innen vorspringenden Führungsrippen wird in einem ausgezeichneten Ausgleich von Toleranzen gesehen. Herstellungsbedingte Toleranzen der Zentrierhülse und/oder des abzudichtenden Bauteils werden durch die Führungsrippen problemlos ausgeglichen. Eine kostenaufwendige, eng tolerierte Herstellung von Zentrierhülse und/oder beispielsweise einer abzudichtenden Welle, ist daher nicht erforderlich.

Die Beschichtung und der polymere Werkstoff zwischen den Schenkeln können einstückig ineinander übergehend ausgebildet sein. Hierbei ist von Vorteil, daß der polymere Werkstoff in einem Herstellungsschrift an die Zentrierhülse angeformt werden kann. Eine zusätzliche Abdichtung zwischen der als Radialwellendichtring ausgebildeten Dichtlippe und der Zentrierhülse ist durch die nahezu vollständig ummantelte Zentrierhülse nicht erforderlich. Durch die Ummantelung ist der metallische Werkstoff der Zentrierhülse vor Korrosion zuverlässig geschützt.

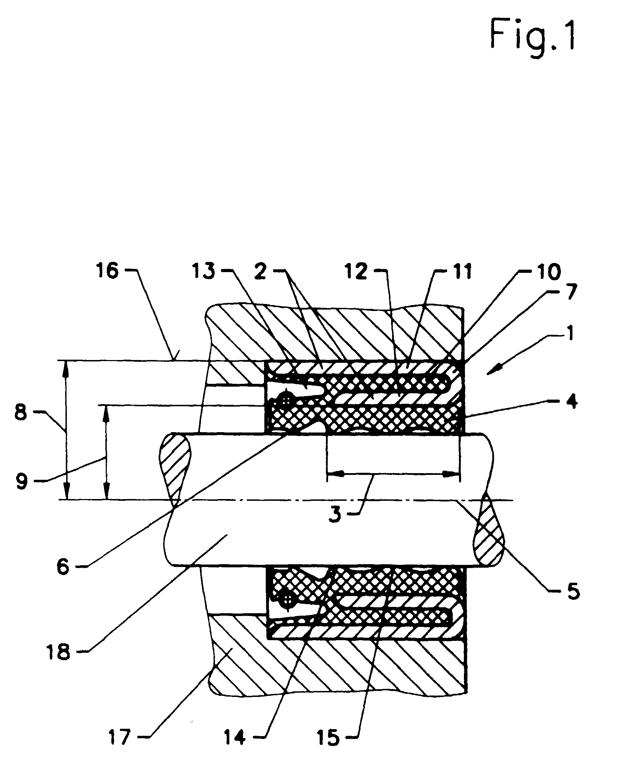

Ein Ausführungsbeispiel der erfindungsgemäßen Zentrierhülse und das Verfahren zu ihrer Herstellung werden nachfolgend anhand der Zeichnung näher beschrieben.

Im Ausführungsbeispiel ist eine Zentrierhülse 1 gezeigt, die einen Stützkörper 2 aus metallischem Werkstoff umfaßt. Der Stützkörper 2 ist zunächst durch einen hohlzylinderförmigen Rohrabschnitt gebildet, der durch Tiefziehen in die hier dargestellte Form gebracht wird. Im Anschluß an seine Umformung wird der metallische Stützkörper 2 mit der elastomeren Beschichtung 4 versehen und anschließend durch eine radial Stauchung des Außendurchmessers 8 und/oder eine radiale Aufweitung des Innendurchmessers 9 kalibriert. Im hier dargestellten Ausführungsbeispiel sind der elastomere Werkstoff und der Stützkörper 2 durch Vulkanisieren miteinander verbunden. Neben der Beschichtung 4, die sich in einem Teilbereich 3 auf der Innenseite des inneren Schenkels 12 erstreckt, ist es vorgesehen, daß auch der Zwischenraum 10, der in radialer Richtung durch den äußeren und inneren Schenkel 11, 12 begrenzt wird, mit elastomerem Werkstoff ausgefüllt ist. Die Beschichtung 4, die Dichtlippe 6 und die Füllung des Zwischenraums 10 sind einstückig ineinander übergehend ausgebildet. Im Anschluß an die Vulkanisierung weist die erfindungsgemäße Zentrierhülse 1 die in der Zeichnung dargestellte Gestalt auf. Um eine gute Führung des Stützkörpers 2 mit seiner Außenumfangsfläche 16 innerhalb des Gehäuses 17 zu gewährleisten, weist dieser eine axiale Erstreckung auf, die sich in axialer Richtung über die Dichtlippe 6 erstreckt. Zur zuverlässigen Befestigung der Zentrierhülse 1 innerhalb des Gehäuses 17 ist die Außenumfangsfläche 16 frei von elastomerem Werkstoff, so daß Relaxationserscheinungen, die die Befestigung der Zentrierhülse 1 innerhalb des Gehäuses 17 beeinträchtigen könnten, zuverlässig vermieden werden. Die erfindungsgemäße Zentrierhülse 1 weist eine ausgezeichnete Abdichtung gegenüber der abzudichtenden Welle 18 auf. Primär erfolgt die Abdichtung auf der Welle 18 durch die in Umfangsrichtung umlaufende Dichtlippe 6, wobei zusätzlich die Beschichtung 4 vorgesehen ist, deren Führungsrippen 14, 15 als nachgeschaltete Dichtungen verstanden werden können. Zum Ausgleich herstellungsbedingter Toleranzen und zur Dämpfung von auftretenden Schwingungen der Welle 18 sind ebenfalls die Führungsrippen 14, 15 der Beschichtung 4 sowie der elastomere Werkstoff innerhalb des Zwischenraums 10 von entscheidender Bedeutung. Toleranzen der miteinander in dichtendem Eingriff befindlichen Bauteile werden durch eine mehr oder minder große Verdrängung des Materials der Führungsrippen 14, 15 in die axial benachbarten Teilbereiche der Beschichtung 4 ausgeglichen, die in radialer Richtung relativ zurückversetzt sind. Eine Dämpfung von Schwingungen erfolgt in Abhängigkeit vom Querschnitt der Führungsrippen 14, 15 und den Dämpfungseigenschaften des elastomeren Werkstoffs, der innerhalb des Zwischenraums 10 angeordnet ist. Durch den elastomeren Werkstoff innerhalb des Zwischenraums 10 kann eine schwingungsdämpfende Grundeinstellung der Zentrierhülse 1 vorgenommen werden, während die Feinabstimmung bezüglich der Minimierung von Schwingungen durch den Querschnitt und damit die elastische Nachgiebigkeit der Führungsrippen 14, 15 vorgenommen wird.

## Patentansprüche

1. Verfahren zur Herstellung einer Zentrierhülse (1), bei dem ein metallischer Stützkörper (2) innenseitig zumindest in einem Teilbereich (3) mit einer Beschichtung (4) aus polymerem Werkstoff versehen wird, die zumindest an einem Ende ihrer axialen Erstreckung mit einer die Achse (5) onzentrisch umschließenden Dichtlippe (6) versehen ist, dadurch gekennzeichnet, daß dem Stützkörper (2) durch Tiefziehen eines kaltverformbaren Werkstoffs eine Wandung (7) verliehen wird, die ein in axialer Richtung U-förmig geöffnetes Profil aufweist, daß das Profil im Anschluß an seine Erzeugung mit der Beschichtung (4) aus polymerem Werkstoff versehen wird und anschließend durch eine radiale Stauchung des Außendurchmessers (8) und/oder eine radiale Aufweitung des Innendurchmessers (9) kalibriert wird.

2. Verfahren nach Anspruch 1, dadurch gekennzeichnet, daß die Kalibrierung durch Einpressung in eine Aufnahmebohrung vorgenommen wird.

3. Verfahren nach Anspruch 1 bis 2, dadurch gekennzeichnet, daß der radiale Zwischenraum (10) zwischen den in axialer Richtung vorspringenden Schenkeln (11, 12) des U-förmig geöffneten Profils vollständig mit polymerem Werkstoff ausgefüllt wird

4. Zentrierhülse, erhalten nach dem Verfahren gemäß Anspruch 1 bis 3, dadurch gekennzeichnet, daß der in radialer Richtung außenliegende Schenkel (11) des Profils die Dichtlippe (6) radial außenseitig in einem Abstand (13) umschließt.

5. Zentrierhülse nach Anspruch 4, dadurch gekennzeichnet, daß die Beschichtung (4) radial innerhalb des innenliegenden Schenkels (12) des Profils zumindest zwei in axialer Richtung aufeinanderfolgende, radial nach innen vorspringende Führungsrippen (14, 15) aufweist.

6. Zentrierhülse nach Anspruch 4 bis 5 dadurch gekennzeichnet, daß die Beschichtung (4) und der polymere Werkstoff zwischen den Schenkeln (11, 12) einstückig ineinanderübergehend ausgebildet sind.

## Claims

1. A process for producing a centring sleeve (1), in which process a metal support body (2) is provided on the inside at least in a partial region (3) with a coating (4) of polymer material, which coating is provided at least at one end of its axial extent with a sealing lip (5) which concentrically surrounds the shaft (5), characterised in that the support body (2), by deep-drawing of a cold-formabLe material, is given a wall (7) which has a profile which is open in the form of a U in the axial direction, in that the profile, following its production, is provided with the coating (4) of polymer material and is then finished to size by radial compression of the external diameter (8) and/or radial expansion of the internal diameter (9).

2. A process according to claim 1, characterised in that the finishing to size is carried out by pressing into a receiving bore.

3. A process according to either of claims 1 and 2, characterised in that the radial space (10) between the limbs (11, 12), which project in the axial direction, of the profile which is open in the shape of a U is completely filled with polymer material.

4. A centring sleeve obtained using the process according to any of claims 1 to 3, characterised in that the limb (11) of the profile which lies on the outside in the radial direction surrounds the sealing lip (6) radially on the outside at a distance (13) therefrom.

5. A centring sleeve according to claim 4, characterised in that the coating (4) has, radially within the inner limb (12) of the profile, at least two guide ribs (14, 15) which follow one another in the axial direction and project radially inwards.

6. A centring sleeve according to either of claims 4 and 5, characterised in that the coating (4) and the polymer material between the limbs (11, 12) are formed so as to merge integrally into one another.

## Revendications

1. Procédé de fabrication d'une douille de centrage (1) dans lequel un corps d'appui métallique (2) est doté du côté interne au moins dans une zone partielle (3) d'un revêtement (4) en matière polymère, qui est doté au moins à une extrémité de son extension axiale d'une lèvre d'étanchéité (6) entourant l'axe (5) de façon concentrique, caractérisé en ce qu'une paroi (7) est attribuée au corps d'appui (2) par emboutissage d'une matière pouvant être formée à froid, qui présente un profil ouvert en forme de U dans le sens axial, en ce que le profil est doté, suite à sa fabrication, du revêtement (4) en matière polymère et est par la suite calibré par un écrasement radial du diamètre externe (8) et/ou par un élargissement radial du diamètre interne (9).

2. Procédé selon la revendication 1, caractérisé en ce que le calibrage est entrepris par enfoncement dans un perçage de positionnement.

3. Procédé selon la revendication 1 à 2, caractérisé en ce que l'espace intermédiaire radial (10) entre les branches (11, 12) du profil ouvert en forme de U faisant saillie dans le sens axial est rempli intégralement de matière polymère.

4. Douille de centrage, obtenue suivant le procédé selon les revendications 1 à 3, caractérisée en ce que la branche (11) du profil, située à l'extérieur dans le sens radial, entoure la lèvre d'étanchéité (6) radialement du côté externe à une certaine distance (13).

5. Douille de centrage selon la revendication 4, caractérisée en ce que le revêtement (4) présente radialement à l'intérieur de la branche située à l'intérieur (12) du profil au moins deux nervures de guidage (14, 15) successives dans le sens axial, faisant saillie radialement vers l'intérieur.

6. Douille de centrage selon les revendications 4 à 5, caractérisée en ce que le revêtement (4) et la matière polymère sont conçus entre les branches (11, 12) en se fondant l'un dans l'autre pour ne former qu'une seule pièce.
